# EUROPÄISCHE PATENTANMELDUNG

(11) **EP 1 376 900 A2**
(43) Veröffentlichungstag der Anmeldung: **02.01.2004**
(21) Anmeldenummer: 03101618.1
(22) Anmeldetag: 04.06.2003
(51) Int. Cl.: H04B 10/08

(54) **Verfahren zur Messung der Signal-Rauschabstände OSNR in einem Wellenlängen-Multiplex (-WDM)-Übertragungssystem**

(30) Priorität: 27.06.2002 DE 10228750
(71) Anmelder: SIEMENS AKTIENGESELLSCHAFT, 80333 München (DE)
(72) Erfinder: Eberlein, Jörg, 82515, Wolfratshausen (DE); Martin, Jürgen, 85653, Aying (DE)

(57) **Zusammenfassung**

Es wird ein Verfahren zur Messung der Signal-Rauschabstände in einem Wellenlängen-Multiplex(-DWDM/WDM)-Übertragungssystem beschrieben, bei dem die Wirkung der verstärkten spontanen Emission ASE durch verschiedene im Übertragungssystem angeordnete Komponente wie z. B. diverse Filter unterschiedlich ist. Die Messpunkte der Signal- und Rauschleistungen zur Messung der Signal-Rauschabstände werden je nach den spektralen Charakteristiken dieser Komponenten von einem Netzwerk-Management gewählt.

## Beschreibung

Die Erfindung betrifft ein Verfahren zur Messung der Signal-Rauschabstände OSNR in einem Wellenlängen-Multiplex(-WDM)-Übertragungssystem nach dem Oberbegriff des Patentanspruches 1.

Aus WO 0209299 A2 ist eine Methode zur Regelung der Preemphase von Kanälen aus einem Wellenlängen-Multiplex(-WDM)-Signal bekannt, bei der eine Messung der Signal-Rauschabstände OSNR im Bezug auf die verstärkte spontane Emission ASE durchgeführt wird. Zwei Variante für die Messung der spontanen verstärkten Emission ASE zwischen Kanälen nach Durchlass eines periodischen Filters - Interleaver-Filter - werden beschrieben, bei denen eine Extrapolation der Messwerten bei einer Rauchleistung zwischen zwei Kanälen oder am Rand des gesamten Kanalspektrums erfolgt. Der Ort der Messung für die Rauschleistung, wo die verstärkte spontane Emission ASE nach verschiedenen Weisen stattfindet, ist jedoch systembedingt, d. h. er ändert sich je nach verwendetem Filter, durch den das WDM-Signal geht. Deshalb fehlt hier eine systembedingte Anpassung für die Ermittlung der Rauchleistung. Die Meßmethode erweist sich auch sehr aufwendig, da sie auf einer Messung in einem Notch zwischen zwei Kanälen beruht. Deshalb muss vor jedem Interleaver-Filter gemessen werden und am Linkende müssen die ganzen gemessenen Werte der spontanen verstärkten Emission ASE aufsummiert werden. In der Praxis bedeutet dieses, dass jedem Filter ein relativ teuerer Messgerät vorgeschaltet sein muss.

Aufgabe der Erfindung ist es, ein Verfahren anzugeben, das je nach den verwendeten Filtern oder Komponenten mit spektralem Einfluss auf die übertragenen Signale eine Messung der Signal-Rauschabstände mit geringem Aufwand ermöglicht.

Eine Lösung der Aufgabe erfolgt durch ein Verfahren mit den Merkmalen des Patentanspruchs 1.

Ausgehend vom einem Verfahren zur Messung der Signal-Rauschabstände von Kanalsignalen in einem Übertragungssystem für Wellenlängen-Multiplex-Signale, das frequenzabhängige Komponenten enthält, bei dem die Signalleistung eines Kanalsignals und die Rauschleistung bei einer außerhalb des Kanalsignals gewählten Rausch-Messfrequenz gemessen werden und aus den Messergebnissen der Signal-Rauschabstand ermittelt wird, werden erfindungsgemäß von einer Steuerung für jedes Kanalsignal eine Signal-Messfrequenz und in Abhängigkeit vom Messort und damit von den frequenzabhängigen Komponenten die Rausch-Messfrequenz mit einem vorbestimmten Abstand zur Mittenfrequenz des Kanalsignals gewählt.

Ein wesentlicher Vorteil des erfindungsgemäßen Verfahrens ist darin zu sehen, dass ein Übertragungssystem-Management die Auswahl der Rausch-Messfrequenz eines Kanalsignals steuert. Je nach dem Messort im Übertragungssystem bzw. je nachdem, welche Beeinflussungen der Komponenten auf das Signal erfolgen, wirken die verstärkte spontane Emission sowie weitere Rausch- oder Verzerrungsquellen auf verschiedene Weisen. In Abhängigkeit vom Messort und gemäß den durchlaufenen Komponenten wird dementsprechend die Position der Rausch-Messfrequenz gewählt, an der die Bestimmung der Signal-Rausch-Abstände optimal ist. Damit ist eine systemunabhängige angepasste Messung der Signal-Rauschabstände am Ende sowie an einer anderen gewünschten Stelle in einer Übertragungsstrecke ermöglicht.

Als Komponenten mit spektralem Einfluss auf die Signale sind hauptsächlich Interleaver, Add-Drop-Module, Multiplexer oder Demultiplexer vorgesehen. Jede in dem Übertragungssystem angeordnete Komponente, die keinen spektralen Einfluss auf das Signal hat, wird als transparent betrachtet.

Insbesondere vorteilhaft ist der Einsatz des erfindungsgemäßen Verfahrens bei dynamisch konfigurierbaren WDM-Übertragungssystemen mit unterschiedlichen spektralen Filterungen und/oder getrennten Netzwerkpfaden für unterschiedliche Kanäle. Bei zunehmender Anzahl der Kanäle, d. h. bei kleinerem Kanalabstand, oder bei höheren Modulationsfrequenzen infolge der Seitenbandmodulationsverbreiterung muss die Frequenzposition zur Messung der Signal-Rauschabstände bei verstärkter spontaner Emission neu geregelt werden. Mit der Kenntnis der Charakteristiken der eingesetzten Komponenten in dem Netzwerk wird automatisch eine optimale Messung der Signal-Rauschabstände eingestellt. Wird eine Änderung der Breite von Kanalsignalen z. B. durch Selbstphasenmodulation, Kreuzphasenmodulation oder "Enhanced Forward Error Correction" detektiert, wird dementsprechend eine neue Frequenzposition zur Messung der Signal-Rauschabstände definiert. Das automatische Verfahren wird vom Netzwerk-Management software-mäßig gesteuert.

Als Netzwerk wird ein Übertragungssystem für WDM- bzw. DWDM-Signale (dense wavelenght division multiplexing) mit z. B. Kanalabständen von 50 GHz betrachtet.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: eine schematische Darstellung einer Messung der Signal-Rauschabstände in einem Netzwerk mit Interleaver-Filtern und einem Add-Drop-Modul,
- Fig. 2:: eine schematische Darstellung einer Messung der Signal-Rauschabstände in einem Netzwerk mit einem Add-Drop-Modul,
- Fig. 3:: ein Spektrum mehrerer Kanäle am Ausgang eines WDM-Übertragungssystems gemäß Fig. 1,
- Fig. 4:: ein Spektrum mehrerer Kanäle am Ausgang eines WDM-Übertragunssystems gemäß Fig. 2,
- Fig. 5:: vergrößerter Ausschnitt aus Fig. 4.

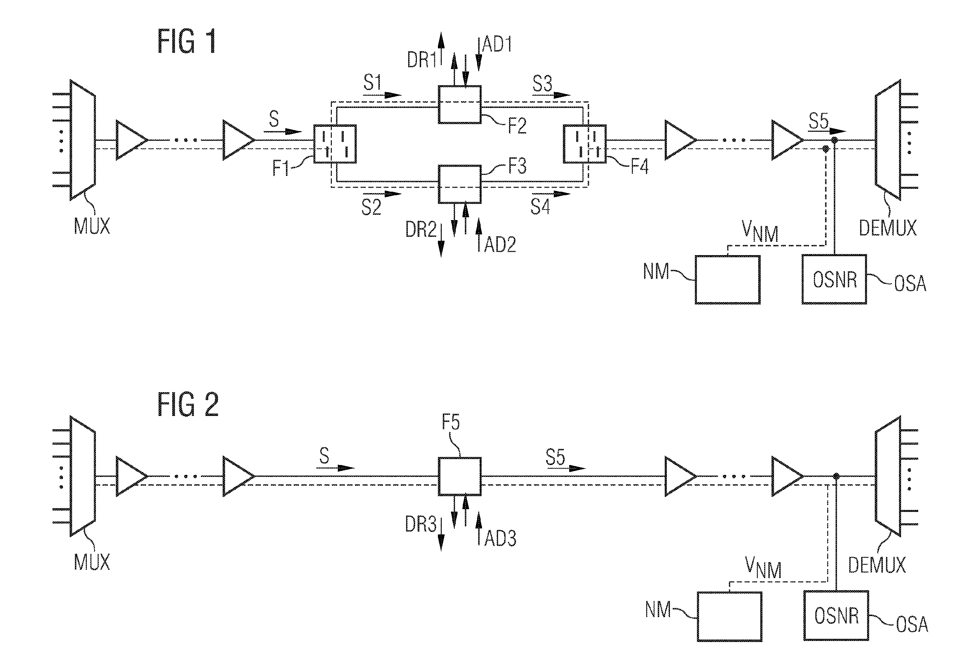

**Fig. 1** zeigt eine schematische Darstellung einer Messung der Signal-Rauschabstände OSNR an einem optischen Spektrumanalysator OSA in einem Netzwerk, das von einem Netzwerk-Management NM gesteuert wird. Kanalsignale werden in ein DWDM-Signal S mit Kanalabständen von 50 GHz mittels einem Multiplexer MUX zusammengeführt, das nach einer ersten Übertragungsstrecke einem Interleaver-Filter F1 zugeführt wird. Am Ausgang des Interleaver-Filters F1 werden zwei WDM-Signale S1, S2 aus dem DWDM-signal S mit nun doppeltem Kanalabständen von 100 GHz abgegeben. Weiterhin passieren die zwei WDM-Signale S1, S2 jeweils ein Add-Drop-Modul F2, F3, bei denen ein oder mehrere Kanäle DR1, DR2 abgezweigt werden, sowie ein oder mehrere Kanäle AD1, AD2 addiert werden. Aus den Add-Drop-Modulen F2, F3 werden zwei WDM-Signale S3, S4 einem weiteren nachgeschalteten Interleaver-Filter F4 zur Zusammenfassung aller ihrer Kanäle in ein DWDM-Signal S5 mit Kanalabständen von 50 GHz zugeführt. Am Ende der Übertragungsstrecke ist ein optischer Spektrumanalysator OSA z. B. vor einem Demultiplexer DEMUX als Messeinrichtung geschaltet, bei dem Messungen der Signal-Rauschabstände OSNR des DWDM-Signals S5 durchgeführt werden. Der optische Spektrumanalysator kann auch an einem anderem Messort im Übertragungssystem angeordnet werden. Die Messung der Signal-Rauschabstände OSNR des DWDM-Signals S5 erfolgt lediglich für Kanäle, zwischen denen ein Kanal unbesetzt ist, d. h. hier mit wenigstens 100 GHz Abstand.=
Ein Netzwerkmanagement NM ist mit allen Komponenten des Übertragungssystems mittels einer Verbindung V_{NM} verbunden.
Die Interleaver-Filter F1, F4 und die Add-Drop-Module F2, F3 weisen unterschiedliche spektrale Eigenschaften auf, die sich charakteristisch auf die verstärkte spontane Emission ASE bei der Messung der Signal-Rauschabstände OSNR auswirken. In der Figur 1 wirken hauptsächlich die Interleaver-Filter F1, F4 mit schmaleren spektralen Durchlassbereichen von ca. 25 GHz als die Add-Drop-Module F2, F3 mit spektralen Durchlassbereichen von ca. 40 GHz. Die Interleaver sind periodisch mit einer Frequenzperiode von 100 GHz. Deshalb wird hier der Netzwerk-Management NM Einstellungen am optischen Spektrumanalysator OSA nach vorbestimmten Eigenschaft im Bezug auf die Interleaver-Filter F1, F4 steuern.

**Fig. 2** zeigt eine schematische Darstellung einer Messung der Signal-Rauschabstände OSNR in einem Netzwerk mit lediglich einem Add-Drop-Modul F5 statt den Interleaver-Filtern F1, F4 und den Add-Drop-Modulen F2, F3 gemäß Figur 1. Dabei werden aus dem übertragenen WDM- bzw. DWDM-Signal S Drop-Kanäle DR3 von der Übertragungsstrecke abgezweigt und weitere Add-Kanäle AD3 dem Signal S zur Erzeugung eines dem Add-Drop-Modul F5 ausgehenden WDM- bzw. DWDM-Signals S5 addiert. Kanäle des Signals S, die durch das Add-Drop-Modul F5 transparent hindurchgehen, werden Express-Kanäle genannt. Die Form der verstärkten spontanen Emission ASE zwischen zwei Kanälen des Signals S5 mit einem Kanalabstand von 100 GHz ist nun von den spektralen Charakteristiken des Add-Drop-Moduls F5 abhängig. Das Netzwerk-Management NM wird eine Einstellung am optischen Spektrumanalysator OSA für die Messung der Signal-Rauschabstände ONSR in Abhängigkeit dieser Charakteristiken steuern.

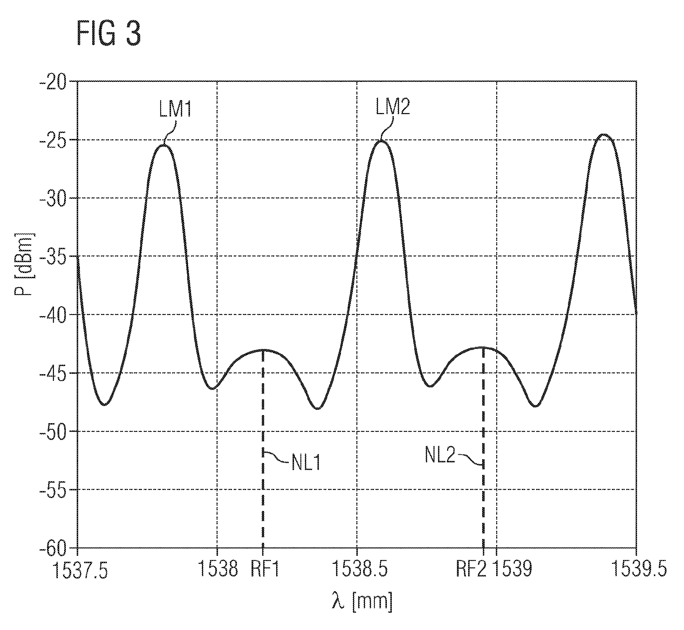

**Fig. 3** zeigt ein am optischen Spektrumanalysator OSA gemessenes Spektrum P(λ) einiger Kanäle des DWDM-Signals S5 nach Durchlaufen der Interleaver-Filter F1, F4 und der Add-Drop-Module F2, F3 gemäß Figur 1. Die Auflösung am optischen Spektrumanalysator OSA beträgt 0,1 nm. Die Kanäle weisen einen Abstand von 100 GHz auf. Die amplitudenniedrigen Linien NL1, NL2 in der Mitte zwischen den Amplitudenmaximen LM1, LM2 der Kanälen stellen den tatsächlichen Untergrund der verstärkten spontanen Emission ASE dar, die durch das Interleaver-Filter F1 durchgeht. Die dazwischenliegenden Einschnitte sind ein Effekt der Interleaver-Filter F1, F4. Für eine geeignete Messung der Signal-Rauschabstände OSNR werden vom Netzwerk-Management NM Rausch-Messfrequenzen RF1, RF2 für die Ermittlung der Rauschleistung in Abstand von 50 GHz zu den entsprechenden Signal-Messfrequenzen bei den Amplitudenmaxima LM1, LM2 gewählt und bei dem optischen Spektrumanalysator OSA eingestellt.

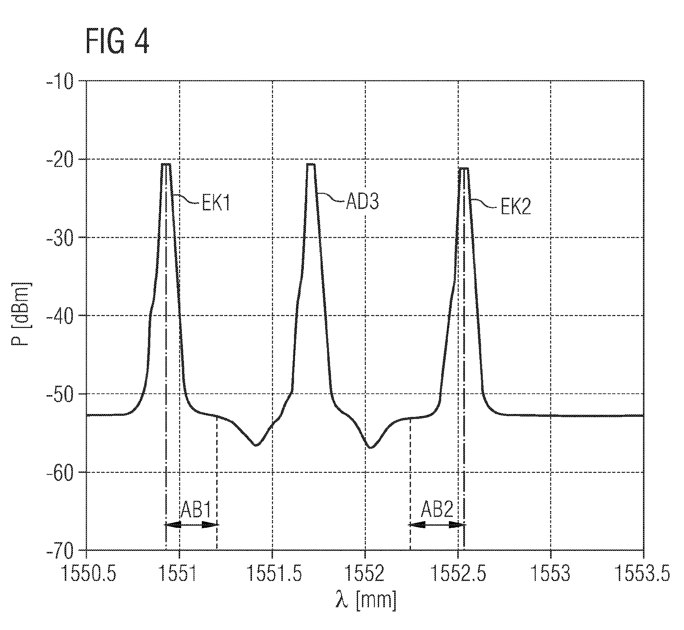

**Fig. 4** zeigt ein am optischen Spektrumanalysator OSA gemessenes Spektrum P(λ) von zwei durchgehenden Kanälen EK1, EK2 als Express-Kanäle mit zwischengelegenem addiertem Kanal AD3 (Add-Kanal) des WDM-Signals S nach Durchlaufen des Add-Drop-Moduls F5 gemäß Figur 2. Die Auflösung am optischen Spektrumanalysator OSA beträgt 0,06 nm. Im Gegensatz zu einem Interleaver-Filter schneidet ein Add-Drop-Modul die verstärkte spontane Emission bei einer Entfernung von 50 GHz von einem Leitungsmaximum heraus. Die Rausch-Messfrequenz zur Messung der Signal-Rauschabstände OSNR der Express-Kanäle EK1, EK2 muss dabei an einem geeigneten Frequenzabstand AB1, AB2 vom Leistungsmaximum gewählt werden. In der Praxis liegt der Abstand im Bereich von ca. 20 bis 40 GHz, d. h. in der Schulter des Leistungspeaks. Für die Bestimmung des Messpunkts für die Signal- und Rauschleistung können zwei Methoden verwendet werden. Entweder wird ein vom Netzwerk-Management NM festgelegter Abstand vom Leistungsmaximum (z. B. 28 GHz) genommen oder eine Kurvenanalyse wird durchgeführt. Bei diesem Ausführungsbeispiel ist ein 10 Gbit/s WDM-Signal mit forward error correction gemessen. Bei Änderung der Breite eines bis aller Kanäle kann der gewählte Abstand neu eingestellt werden.

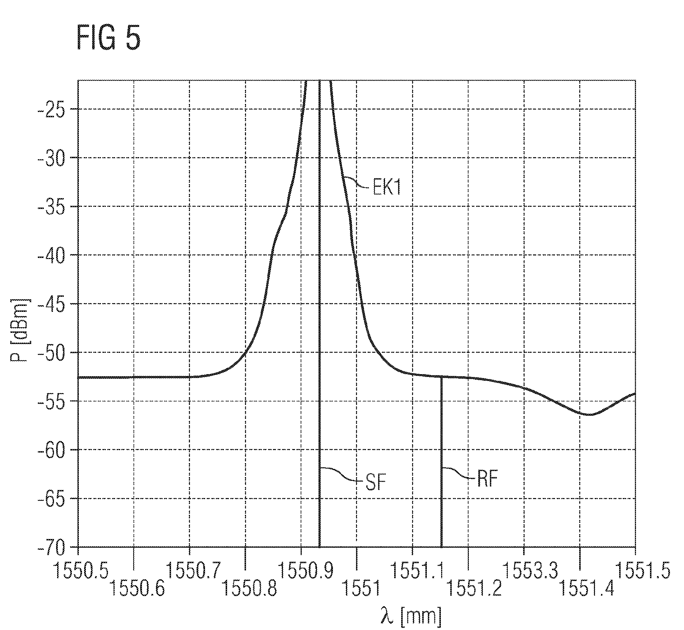

In **Fig. 5** ist ein Spektrum P(λ) des Express-Kanals EK1 am Ausgang einer DWDM-Ubertragungsstrecke mit einem Add-Drop-Modul gemäß Figuren 2 und 4. Die zwei Messpunkte SF und RF für die Ermittlung der Signal- und Rauschleistung sind durch zwei durchgezogene Linie bei ca. 1550,92 nm und bei ca. 1551,16 nm dargestellt.

Das erfindungsgemäße Verfahren begrenzt sich selbstverständlich nicht an Interleavern, Add-drop-Modulen, Multiplexern oder Demultiplexern, sondern wird bei anderen eingesetzten oder in der Zukunft einsetzbaren Komponenten mit Einfluss auf die verstärkte spontane Emission ASE durch den Netzwerk-Management ohne Aufwand erweitert.

## Patentansprüche

1. Verfahren zur Messung der Signal-Rauschabstände (OSNR) von Kanalsignalen in einem Übertragungssystem für Wellenlängen-Multiplex-Signale (S), das frequenzabhängige Komponenten (F1, F2, ...) enthält,
bei dem die Signalleistung eines Kanalsignals und die Rauschleistung bei einer außerhalb des Kanalsignals gewählten Rausch-Messfrequenz gemessen werden und aus den Messergebnissen der Signal-Rauschabstand (OSNR) ermittelt wird,
**dadurch gekennzeichnet,**
**dass** von einer Steuerung für jedes Kanalsignal eine Signal-Messfrequenz und in Abhängigkeit vom Messort und damit von den frequenzabhängigen Komponenten die Rausch-Messfrequenz mit einem vorbestimmten Abstand zur Mittenfrequenz des Kanalsignals gewählt werden.

2. Verfahren nach Anspruch 1,
**dadurch gekennzeichnet,**
**dass** zur Ermittlung der Rauschleistung eines Kanalsignals mehrere Messungen bei unterschiedlichen Rausch-Messfrequenzen durchgeführt werden.

3. Verfahren nach einem der vorhergehenden Ansprüche,
**dadurch gekennzeichnet,**
**dass** die Rauschleistung bei einem unbesetzten Kanal oder einem benachbarten Kanal gemessenen wird.

4. Verfahren nach einem der Ansprüche 1 bis 2,
**dadurch gekennzeichnet,**
**dass** bei einem Übertragungssystem, das als frequenzabhängige Komponenten Add-Drop-Einrichtungen mit Kanalfiltern enthält, die Messung der Rauschleistung bei einer Rausch-Messfrequenz erfolgt, deren Abstand zur Kanalmitte weniger als der halbe Kanal-Frequenzabstand ist.

5. Verfahren nach einem der vorhergehenden Ansprüche,
**dadurch gekennzeichnet,**
**dass** als Steuerung ein Netzwerkmanagement verwendet wird.

6. Verfahren nach einem der vorhergehenden Ansprüche,
**dadurch gekennzeichnet,**
**dass** von der Steuerung neben der Signal-Messfrequenz und der verwendeten Komponenten (F1, F2, ...) ein zusätzliches Steuerkriterium zur Festlegung der Rausch-Messfrequenz an einer Messeinrichtung übermittelt werden.
